# EUROPÄISCHE PATENTSCHRIFT

(11) **EP 2 922 628 B1**
(45) Veröffentlichungstag und Bekanntmachung des Hinweises auf die Patenterteilung: **28.06.2017**
(21) Anmeldenummer: 13792697.8
(22) Anmeldetag: 20.11.2013
(51) Int. Cl.: B01J 20/10, B01J 20/12, B01J 20/20, C11D 3/12, C11D 7/02, C11D 17/00, C11D 17/04, D01D 5/24, D01F 11/00

(54) **ENTFETTUNGSMISCHUNG**
DEGREASING MIXTURE
MÉLANGE DÉGRAISSANT

(30) Priorität: 21.11.2012 DE 202012104510 U
(43) Veröffentlichungstag der Anmeldung: 30.09.2015
(73) Patentinhaber: Eurotec Vertriebsgesellschaft m.b.H., 14797 Lehnin (DE)
(72) Erfinder: WINKELKÖTTER, Martina, 82234 Weßling (DE)
(74) Vertreter: Nunnenkamp, Jörg
(86) Internationale Anmeldenummer: PCT/EP2013/074314
(87) Internationale Veröffentlichungsnummer: WO 2014/079899

(56) Entgegenhaltungen:
- EP-B1- 1 757 677
- WO-A1-2007/007051

## Beschreibung

Die Erfindung betrifft eine Entfettungsmischung zum Entfernen von Ölen, Fetten oder dergleichen hydrophoben Bestandteilen von Oberflächen eines Substrates. - Bei dem Substrat handelt es sich vorzugsweise um eine Metalloberfläche oder Kunststoffoberfläche, wobei selbstverständlich auch Kombinationen umfasst werden.

Entfettungsmischungen der vorstehend genannten Art sind aus der Praxis grundsätzlich bekannt. Zusätzlich sei auf die EP 1 757 677 B1 verwiesen, welche ein Trockenpulver als Entfettungsmischung in Bezug nimmt. Das Trockenpulver selbst kann als Mischung aus einem Tektosilikat und einem Schichtsilikat ausgebildet sein.

Ähnlich geht die US 2005/037937 A1 vor, die ein Verfahren zur Entfernung von öligen Verschmutzungen auf Oberflächen beschreibt. Zu diesem Zweck wird die zugehörige Oberfläche mit einem porösen Trockenpulver bestreut. Das betreffende Pulver wird nach der Adsorption der hydrophoben Bestandteile von der Oberfläche entfernt. Weitere Einzelheiten bleiben jedoch offen.

Der Erfindung liegt das technische Problem zugrunde, eine Entfettungsmischung anzugeben, die sich durch eine hohe Aufnahmekapazität für Fette, Öle oder dergleichen auszeichnet, darüber hinaus einfach auf eine Substratoberfläche aufzubringen ist und eine hohe Wirksamkeit aufweist.

Zur Lösung dieses technischen Problems lehrt die Erfindung eine Entfettungsmischung nach Anspruch 1. In diesem Zusammenhang hat es sich bewährt, die granulatartige bzw. körnige Entfettungsmischung beispielsweise mit Hilfe von Düsen auf eine zu entfettende Oberfläche aufzubringen. Zur Verbesserung der Reinigungswirkung der Entfettungsmischung ist es darüber hinaus durch die EP 1 757 677 B1 bekannt, die Entfettungsmischung durch mechanisches Einwirken, beispielsweise durch Bürsten, auf die zu reinigende Oberfläche aufzubringen. Ergänzend sei auf das Gebrauchsmuster DE 20 2004 021 666 U1 verwiesen. D. h., die Entfettungsmischung kann insgesamt durch Aufblasen, die Aufbringung mit elektrostatischen Pistolen und Geräten oder dergleichen erfolgen, wie dies beispielsweise von der Pulverbeschichtung her bekannt ist. Außerdem lässt sich die Entfettungsmischung durch Pressen aufbringen. Beim Auftrag mit Düsen findet allgemein eine Fluidisierung der Entfettungsmischung statt. Insgesamt gelingt es mit der erfindungsgemäßen Entfettungsmischung, die Leistungsfähigkeit gegenüber aus der Praxis bekannten Entfettungsmischungen zu verbessern.

Die Erfindung geht in diesem Zusammenhang zunächst einmal von der überraschenden Erkenntnis aus, dass durch die Vorgabe der Partikelgröße für die Silikatmischung eine besonders effektive Entfernung der hydrophoben Bestandteile von der Oberfläche des jeweiligen Substrates gelingt. Tatsächlich stellt die Silikatmischung ja den Hauptbestandteil der erfindungsgemäßen Entfettungsmischung dar, wobei an dieser Stelle bevorzugt die Entfettungsmischung zumindest 90 Massen-% und vorzugsweise zumindest 95 Massen-% der Silikatmischung enthält. Darüber hinaus mag noch ein Additiv oder können mehrere Additive der Silikatmischung zur Bildung der Entfettungsmischung zugesetzt werden. Diese Additive liegen typischerweise in einer Menge von 0 bis 10 Massen-% und bevorzugt 0 bis 5 Massen-% in der Entfettungsmischung vor.

Jedenfalls stellt die Silikatmischung den Hauptbestandteil dar, liegt also zu mehr als 50 Massen-% in der Entfettungsmischung vor. In Verbindung mit der weiteren Tatsache, dass bis zu 90 Massen-% der in der Silikatmischung enthaltenen Körner eine Partikelgröße von weniger als 60 µm aufweisen, beobachtet man folglich eine lösungsmittelfreie Entfettungsmischung, bei welcher die Körner überwiegend kleiner als 60 µm von ihrer Partikelgröße her ausgelegt sind. Dadurch lassen sich beispielsweise Fette oder auch Öle und insbesondere Ölfilme von Substraten wie Metalloberflächen oder Kunststoffoberflächen besonders wirkungsvoll entfernen. Das gilt auch für Silikone und andere Trennmittel.

Denn solche Öl- oder Fettfilme verfügen regelmäßig über eine Schichtdicke von bis zu 0,15 µm, wenn man bei einer üblichen Verölung eine Beschichtungsmenge von 1,2 g/m² und ein leichtes Mineralöl mit Kohlenwasserstoff-Ketten unterschiedlicher Länge zugrunde legt (vgl. beispielsweise DE 10 2007 020 552 A1, Beispiel 1). Als Folge hiervon beträgt die Korngröße das mehr als 100-fache der Schichtdicke, so dass sich die Schicht schon bei geringer mechanischer Energie der einzelnen Körner aufbrechen lässt. Diese mechanische Energie kann beispielsweise durch das zuvor bereits beschriebene Bedüsen oder durch Bürsten aufgebracht werden.

Gleichzeitig begünstigt das beschriebene Größenverhältnis zwischen der Schichtdicke solcher Öl- oder Fettfilme und der Korngröße der erfindungsgemäßen Entfettungsmischung die Einlagerung des Öles bzw. Fettes in den einzelnen Körnern bzw. hieran durch üblicherweise Physisorption. Hierbei kommen allgemein Van-der-Waals-Kräfte zum Einsatz. Dabei werden die adsorbierten Öl- oder Fettmoleküle durch physikalische Kräfte am oder im Korn gebunden. Jedenfalls begünstigt das beschriebene Größenverhältnis, bei dem die Korngröße das mehr als 100-fache der Schichtdicke des zu entfernenden Öl- oder Fettfilmes beträgt, nicht nur das Aufbrechen und Ablösen des entsprechenden Filmes, sondern auch die An- und Einlagerung der entstehenden Öl- bzw. Fetttröpfchen an den jeweiligen Körnern und / oder auch in ihrem Innern.

Hinzu kommt, dass sowohl Schichtsilikate als auch Gerüstsilikate bekanntermaßen jeweils über eine poröse Oberfläche verfügen. Tatsächlich werden in diesem Zusammenhang Poren beobachtet, die typischerweise Durchmesser im Nanometerbereich aufweisen und folglich die aus der Schicht herausgelösten Öltröpfchen besonders wirkungsvoll in ihrem Innern aufnehmen können, was grundsätzlich bekannt ist (vgl. EP 1 757 677 B1 sowie US 2005/037937 A1).

Als weiterer Vorteil und Besonderheit hat sich herausgestellt, dass im Rahmen der Erfindung die maximale Korngröße des körnigen Schichtsilikates kleiner als die maximale Korngröße des Gerüstsilikates eingestellt wird und mit besonderen sowie überraschenden Effekten verbunden ist. Tatsächlich sorgt diese Bemessungsregel wie die zuvor bereits diskutierte Begrenzung der Partikelgröße der Körner auf überwiegend weniger als 60 µm in gleicher Weise dafür, dass eine hohe Aufnahmekapazität für Fette, Öle oder dergleichen hydrophobe Bestandteile in Verbindung mit einer besonderen Reinigungswirkung beobachtet wird. Dabei geht die Erfindung von der weiteren Erkenntnis aus, dass Gerüstsilikate regelmäßig bei der Einlagerung von Stoffen keine Veränderung des Gitteraufbaus aufweisen. Das unterscheidet sie von den Schichtsilikaten, die bei der Einlagerung der hydrophoben Bestandteile in der Regel ihren Schichtabstand ändern, folglich quellen. Dieser Tatsache trägt die Erfindung dadurch Rechnung, dass die maximale Korngröße des körnigen Schichtsilikates kleiner als die maximale Korngröße des Gerüstsilikates eingestellt wird.

Als Folge hiervon ist damit zu rechnen, dass nach der Einlagerung der hydrophoben Bestandteile in die Schichtsilikate und die damit verbundene Quellung unter Änderung des Schichtabstandes bei den Schichtsilikaten vergleichbare Korngrößen wie bei den Gerüstsilikaten beobachtet werden, die praktisch keine Veränderung des Gitteraufbaus bei der Einlagerung aufweisen. Im Regelfall beträgt die maximale Korngröße des Gerüstsilikates in etwa das 1,5-fache bis 2,0-fache der maximalen Korngröße des Schichtsilikates. Dadurch trägt die Erfindung dem Umstand Rechnung, dass die eingesetzten Schichtsilikate bei der Einlagerung der hydrophoben Bestandteile quellen. Tatsächlich werden an dieser Stelle Änderungen des Schichtsilikates von bis zu dem Zweifachen beobachtet.

Dadurch ist insgesamt nach der Einlagerung der hydrophoben Bestandteile mit einer homogenen Verteilung der Partikelgröße der Körner in der Silikatmischung zu rechnen, welche die Entsorgung bzw. weitere Verarbeitung erleichtert. Denn eine solche homogene Verteilung der Partikelgröße der Körner lässt sich nicht nur einfach aussondern, sondern bei Bedarf auch recyceln. Hierin sind die wesentlichen Vorteile zu sehen.

Die Korngröße bzw. Partikelgröße der in der Silikatmischung enthaltenen Körner kann grundsätzlich durch Siebung ermittelt werden. Hierbei wird mit einem Satz immer feiner werdender Siebe gearbeitet. Die Korngrößenverteilung oder auch Häufigkeitsverteilung wird so ermittelt, dass der klassierte Äquivalentdurchmesser des jeweiligen Kornes bzw. dessen Partikelgröße dem prozentualen Anteil in Massen-% der Körner gegenübergestellt wird. Die Ölaufnahme der erfindungsgemäßen Entfettungsmischung mag dabei insgesamt im Bereich von 20 g bis 40 g Öl / 100 g Entfettungsmischung liegen.

Bevorzugt weisen 60 Massen-% der Körner des Schichtsilikates und/oder des Gerüstsilikates eine Größe von 5 µm bis 55 µm auf. Weiter handelt es sich regelmäßig bei dem Substrat um eine Metalloberfläche und/oder Kunststoffoberfläche und/oder Textiloberfläche. Dabei wird die Entfettungsmischung zweckmäßigerweise zum Entfernen von Fetten und Ölen der Metalloberflächen und/oder Kunststoffoberflächen und/oder Textiloberflächen eingesetzt. Bewährtermaßen verfügen das Gerüstsilikat und/oder das Schichtsilikat jeweils über eine poröse Oberfläche. Besonders bevorzugt weisen das Schichtsilikat und/ oder Gerüstsilikat hauptsächlich bzw. im Wesentlichen Mikroporen und Mesoporen auf. Mikroporen meint Poren, die vorzugsweise einen Durchmesser von bis zu 2 nm aufweisen. Mesoporen weisen im Rahmen der Erfindung einen Durchmesser von beispielsweise 2 nm bis 50 nm auf. Gemäß einer Ausführungsform ist das Schichtsilikat und/oder das Gerüstsilikat beispielsweise durch Ionentausch mit organischen und/oder anorganischen Ionen und Komplexen aktiviert. Gemäß einer bevorzugten Ausführungsform ist das Schichtsilikat und/ oder Gerüstsilikat durch Behandlung mit Säure, beispielsweise Schwefelsäure, Salzsäure, organische Säure aktiviert.

D.h., das fragliche Schichtsilikat bzw. Gerüstsilikat kann als Naturprodukt oder als behandeltes Produkt in obigem Sinne Verwendung finden. Auch eine Anpassung der betreffenden Produkte durch Sieben und/oder Mahlen hinsichtlich der gewünschten Korngröße ist möglich und denkbar. Es empfiehlt sich, dass durch die Aktivierung des Schichtsilikats und/oder des Gerüstsilikats die Porenverteilung und/ oder Größe und/oder Oberflächencharakteristik der Poren einstellbar ist. Oberflächencharakteristik meint im Rahmen der Erfindung die Organophilie oder Hydrophilie einer inneren Oberfläche der Poren. Gemäß einer Ausführungsform sind die Poren des Gerüstsilikats und/oder Schichtsilikats an die aufzunehmenden Partikel durch die Aktivierung anpassbar. Erfindungsgemäß weist das Schichtsilikat eine maximale Korngröße von 25 µm bis 65 µm auf. Bevorzugt ist die maximale Korngröße des Schichtsilikats kleiner oder gleich 60 µm. Erfindungsgemäß weist das Gerüstsilikat eine maximale Korngröße von 55 µm bis 85 µm auf. Empfohlenermaßen ist die maximale Korngröße des Gerüstsilikats kleiner oder gleich 63 µm. Die Korngröße ist beispielsweise durch Sieben bestimmbar. Außerdem lässt sich die Korngröße wahlweise durch Mahlen anpassen.

Es liegt im Rahmen der Erfindung, dass bis zu 90 Massen-% der in der Silikatmischung enthaltenen Körner eine Partikelgröße von weniger als 60 µm aufweisen. Massen-% meint im Rahmen der Erfindung einen Quotient, bei dem der Divisor die Masse der in der Silikatmischung enthaltenen Körner und der Dividend die Masse der Körner der Silikatmischung einer bestimmten Größe angibt. Empfohlenermaßen weisen bis zu 50 Massen-% der in der Silikatmischung enthaltenen Körner eine Partikelgröße von weniger als 25 µm auf. Körner meint im Rahmen der Erfindung die Körner des Gerüstsilikats und/oder die Körner des Schichtsilikats. Besonders bevorzugt weisen ungefähr 10 Massen-% der in der Silikatmischung enthaltenen Körner des Schichtsilikats und/oder Gerüstsilikats eine Partikelgröße von weniger als 5 µm und bevorzugt von weniger als 3 µm auf.

In einer ersten Ausführungsform der Silikatmischung weisen 99 Massen-% der Körner der Silikatmischung eine Partikelgröße von weniger als 52 µm auf. Vorzugsweise weisen in der ersten Ausführungsform 98 Massen-% der Körner eine Partikelgröße von weniger als 47 µm auf. Es hat sich bewährt, dass 97 Massen-% der Körner der Silikatmischung in der ersten Ausführungsform eine Partikelgröße von weniger als 43 µm aufweisen. Bevorzugt weisen 90 Massen-% in der ersten Ausführung der Partikel der Silikatmischung eine Größe von weniger als 31 µm auf. In einer zweiten Ausführungsform weisen bevorzugt 90 Massen-% der in der Silikatmischung enthaltenen Körner eine Größe von weniger als 60 µm auf. Bevorzugt weisen in der zweiten Ausführungsform 50 Massen-% der Körner der Silikatmischung eine Größe von weniger als 21 µm auf. Besonders bevorzugt weisen mehr als die Hälfte der in der Silikatmischung enthaltenen Gerüstsilikatkörner einen Durchmesser von mehr als 20 µm auf.

Es liegt im Rahmen der Erfindung, dass der Schichtsilikatgehalt der Silikatmischung höher, vorzugsweise um den Faktor 1,1 bis 2 höher, als der Gerüstsilikatgehalt der Silikatmischung ist. Das heißt der Schichtsilikatgehalt der Silikatmischung beträgt das 1,1-fache bis 2-fache des Gerüstsilikatgehaltes der Silikatmischung. Diese Bemessungsregel trägt dem Umstand Rechnung, dass Schichtsilikate regelmäßig kostengünstiger als Gerüstsilikate sind. Dennoch werden die gewünschten Eigenschaften der Silikatmischung beibehalten. Die Silikatmischung weist 20 bis 60 Massen-% und vorzugsweise 30 bis 50 Massen-% des Gerüstsilikates auf und enthält 40 bis 80 Massen-%, vorzugsweise 50 bis 70 Massen-% des Schichtsilikates. Beispielsweise enthält die Silikatmischung ungefähr 50 Massen-% des Schichtsilikates. Es ist möglich, dass die Silikatmischung ungefähr 40 Massen-% des Gerüstsilikates enthält.

Es empfiehlt sich, dass das Gerüstsilikat und/oder das Schichtsilikat vorzugsweise jeweils ein Alumosilikat ist/sind. Bevorzugt ist das Schichtsilikat ein vorzugsweise dreischichtiges, quellbares Schichtsilikat. Es empfiehlt sich, dass als Gerüstsilikat zumindest eine aus der Gruppe der Zeolithe ausgewählte Komponente in der Silikatmischung enthalten ist. Das Gerüstsilikat (Tektosilikat) weist ein Porensystem mit einer hohen spezifischen Oberfläche auf, so dass vielfältige Möglichkeiten zur Adsorption hydrophober und/oder hydrophiler Bestandteile gegeben sind. Beispielsweise ist das Gerüstsilikat ein natürlich vorkommender Clinoptilolith und/der ein Chabasit.

Gemäß einer Ausführungsform ist das Schichtsilikat zumindest ein aus der Gruppe "Bentonit, Kaolinit, Polygorskit, Illit, Glimmer, Chlorit, Pyrophyllit, Imogolit, Montmorillonit" ausgewähltes Schichtsilikat. Empfohlenermaßen ist das Schichtsilikat ein smektitisches Tonmineral. Besonders bevorzugt ist das Schichtsilikat ein Calciumbentonit. Vorteilhafterweise ist das Bentonit mit beispielsweise Natriumcarbonat aktiviert. Das betreffende Tonmineral bzw. Schichtsilikat kann mit Calcium, Magnesium und/oder Natrium belegt sein.

Empfohlenermaßen enthält die Entfettungsmischung zumindest ein körniges Adsorbens als Additiv welches Adsorbens aus der Gruppe "Aktivkohle, Talkum" ausgewählt ist. Gemäß einer Ausführungsform weist das Adsorbens eine Korngröße von beispielsweise weniger als 100 µm, zweckmäßiger von weniger als 80 µm und bevorzugt von weniger als 60 µm auf. Besonders bevorzugt weist das Adsorbens eine Korngröße von weniger als 45 µm auf.

Es ist möglich, dass die Entfettungsmischung bis zu 10 Massen-%, zweckmäßigerweise 1 bis 10 Massen-%, vorzugsweise 1 bis 8 Massen-% und bevorzugt 0,5 bis 5 Massen-% des körnigen Adsorbens enthält. Der Rest (ca. 0,5 Massen-% bis 1 Massen-% können Verunreinigungen sein. Besonders bevorzugt weist die Entfettungsmischung zumindest 90 Massen-% und vorzugsweise zumindest 95 Massen-% der Silikatmischung auf. Empfohlenermaßen besteht die Entfettungsmischung im Wesentlichen aus der Silikatmischung bzw. der Silikatmischung und dem Adsorbens.

Es ist möglich, dass die Entfettungsmischung zumindest einen aus der Gruppe "Quarz, Sand, Glaskugeln, Maisschrot, Nussschalen, Stahlkugeln, Korund, Microfaserkomponentenprodukte sowie Vliese, Filze und Gummi-Kautschukprodukte" ausgewählten Zusatzstoff enthält. Bevorzugt wird ein Gemisch aus der Entfettungsmischung und dem Zusatzstoff zum Sandstrahlen des Substrates eingesetzt. Die Entfettungsmischung ist beispielsweise das Produkt Eurosorb der Firma Eurotec Vetriebsgesellschaft m.b.H..

Weiterhin lehrt die Erfindung zur Lösung des technischen Problems ein Reinigungstuch zur Entfernung von Fetten, Ölen und dergleichen hydrophoben Bestandteilen von vorzugsweise mit Fetten, Ölen oder dergleichen kontaminierten Oberflächen, wobei das Reinigungstuch zumindest eine Tuchlage aus einem Fasermaterial aufweist und wobei die Tuchlage die Entfettungsmischung enthält. Vorzugsweise ist die Tuchlage eine Textilie. Beispielsweise ist die Textilie ein Stoff, ein Vlies, ein Papier, ein Filz, ein Microfasertuch etc. Vorzugsweise weist die Textilie eine Vielzahl von Fasern, beispielsweise von Hohlfasern auf. Es ist möglich, dass die Entfettungsmischung in zumindest einem Teil der Fasern, vorzugsweise der Hohlfasern, enthalten ist.

Gemäß einer Ausführungsform ist ein Hohlraum der Hohlfasern zumindest teilweise und beispielsweise vollständig bzw. im Wesentlichen vollständig mit der Entfettungsmischung ausgefüllt. Vorteilhafterweise ist eine äußere Oberfläche bzw. eine dem Hohlraum abgewandte Oberfläche der Hohlfasern teilweise und vorzugsweise vollständig bzw. im Wesentlichen vollständig mit der Entfettungsmischung beschichtet. Zweckmäßigerweise ist eine innere bzw. hohlraumseitige Oberfläche der Hohlfasern zweckmäßigerweise zumindest teilweise und besonders bevorzugt vollständig bzw. im Wesentlichen vollständig mit der Entfettungsmischung beschichtet. Gemäß einer Ausführungsform ist die äußere Oberfläche und/oder die hohlraumseitige zugewandte Oberfläche mit der Entfettungsmischung beschichtet und/oder ist der Hohlraum der Hohlfasern zumindest teilweise mit der Entfettungsmischung befüllt. Es ist möglich, dass das Reinigungstuch als zweilagiges Reinigungstuch ausgebildet ist, wobei zwischen einer unteren Tuchlage und einer oberen Tuchlage die Entfettungsmischung angeordnet ist. Das Reinigungstuch weist mit anderen Worten gemäß einer bevorzugten Ausführungsform eine Sandwichstruktur mit der Schichtenfolge Tuchlage/Entfettungsmischung/Tuchlage auf. Das Reinigungstuch ist beispielsweise ein Einzeltuch. Es ist möglich, dass das Reinigungstuch eine Reinigungstuchrolle ist. Die vorzugsweise kontaminierte Oberfläche des Substrates ist beispielsweise eine Metalloberfläche, eine Kunststoffoberfläche, eine Textiloberfläche oder menschliche Haut.

Weiterhin lehrt die Erfindung zur Lösung des technischen Problems einen Reinigungsstift zur Entfernung von Fetten, Ölen und dergleichen hydrophoben Bestandteilen von vorzugsweise kontaminierten Oberflächen eines Substrates, wobei der Reinigungsstift einen Griffabschnitt und ein eine Entfettungsmischung enthaltendes Applizierungselement aufweist. Der Griffabschnitt ist mit der Maßgabe ausgestaltet, dass er von einer Person erfassbar ist. Das Applizierungselement ist beispielsweise eine Mine, die zumindest an ihrem dem Griffabschnitt abgewandten Ende bzw. an einem freien Ende die Entfettungsmischung enthält. Zweckmäßigerweise wird die kontaminierte Oberfläche mit dem Reinigungsstift behandelt, indem das Applizierungselement, welches Applizierungselement die Entfettungsmischung aufweist, auf die kontaminierte Oberfläche aufgedrückt wird. Grundsätzlich ist es möglich, dass das Applizierungselement als Rotationskörper ausgebildet ist. Vorteilhafterweise weist der Reinigungsstift einen Vorratsbehälter auf, wobei der Rotationskörper vorzugsweise mit der in dem Vorratsbehälter aufgenommenen Entfettungsmischung beschichtet wird. Durch Drehen des Rotationskörpers erfolgt vorteilhafterweise eine Übertragung der auf den Rotationskörper aufgebrachten Entfettungsmischung auf die kontaminierte Oberfläche. Die kontaminierte Oberfläche ist beispielsweise eine Textilie. Zweckmäßigerweise nimmt das mit der Entfettungsmischung versehene Applizierungselement das Öl oder Fett oder den hydrophoben Bestandteil auf.

Es ist möglich, die Entfettungsmischung zum Entfernen von Ölen, Fetten oder dergleichen hydrophoben Bestandteile auf eine Oberfläche eines Substrates beispielsweise durch Bedüsen aufzubringen. Gemäß einer Ausführungsform wird die Entfettungsmischung auf die Oberfläche eines Substrates aufgebracht, indem zumindest die Oberfläche des Substrates und bevorzugt das gesamte Substrat bzw. im Wesentlichen gesamte Substrat in die Entfettungsmischung eingetaucht wird. Empfohlenermaßen wird die Entfettungsmischung beispielsweise durch Berieseln auf die vorzugsweise kontaminierte Oberfläche des Substrates aufgetragen, wobei bevorzugt eine schnelle Relativbewegung zwischen dem Substrat bzw. der Oberfläche des Substrats und der Entfettungsmischung erzeugt wird.

Gegebenenfalls wird das vorzugsweise mit der Entfettungsmischung beschichtete Substrat beispielsweise beim Aufbringen der Entfettungsmischung auf die Oberfläche vibrierend oder auch pneumatisch gelagert, um eine schnelle Relativbewegung zwischen der Entfettungsmischung und der Oberfläche des Substrats sicherzustellen. Gemäß einer vorteilhaften Ausführungsform wird das die vorzugsweise kontaminierte Oberfläche aufweisende Substrat in einem Trommelkörper gehalten, in welchen Trommelkörper zusätzlich die Entfettungsmischung eingefüllt wird. Durch Drehen des Trommelkörpers wird die bevorzugt rieselfähige Entfettungsmischung gleichförmig bzw. im Wesentlichen gleichförmig auf der vorzugsweise kontaminierten Oberfläche des Substrats verteilt.

Es liegt im Rahmen der Erfindung, dass der Entfettungsmischung ein beim Sandstrahlen eingesetzter Zusatzstoff beigefügt wird und dass das Gemisch aus dem Zusatzstoff und der Entfettungsmischung zum Sandstrahlen der Oberfläche und zum Entfernen von Fetten, Ölen oder dergleichen hydrophoben Bestandteile von der Oberfläche eingesetzt wird. Bevorzugt wird lediglich die Entfettungsmischung auf die Oberfläche aufgebracht. Vorzugsweise wird die Entfettungsmischung auf die Oberfläche des Substrates aufgedruckt bzw. aufgepresst.

Gemäß einer Ausführungsform erfolgt der Auftrag der Entfettungsmischung auf eine Oberfläche eines Substrates durch Walzen und/oder durch Tampondruck. Allgemein kann die erfindungsgemäße Entfettungsmischung aber auch dadurch aufgebracht werden, dass das Substrat und ggf. die Mischung als solche jeweils eine elektrostatische Aufladung erfahren. Durch anschließendes Abblasen mit einem ionisierten Luftstrahl kann das gesättigte Pulver bzw. die Entfettungsmischung wieder abgeblasen, gebürstet, gewischt, gesaugt etc. werden, je nach den Anforderungen. Es hat sich als vorteilhaft herausgestellt, das Substrat mit der mit dem Öl oder Fett kontaminierten Oberfläche in die Entfettungsmischung einzutauchen. Gemäß einer bevorzugten Ausführungsform wird die Entfettungsmischung elektrostatisch aufgeladen und auf eine bevorzugt geerdete Substratoberfläche aufgetragen. Gemäß einer weiteren Ausführungsform wird die Entfettungsmischung bevorzugt durch Einleiten eines Gases in die Entfettungsmischung fluidisiert und in einem Wirbelschichtverfahren auf die zu behandelnde, kontaminierte Oberfläche des Substrates aufgebracht.

Gemäß einer Ausführungsform wird zunächst das Substrat vorteilhafterweise durch Pressen, Stanzen, Bohren und/oder Umformen in einem ersten Bearbeitungsschritt erzeugt, wobei in einem dem ersten Bearbeitungsschritt nachgelagerten zweiten Schritt die Entfettungsmischung auf zumindest eine Oberfläche des Substrates mit einem Werkzeug aufgetragen wird. Nach der Adsorption der auf der Substratoberfläche vorhandenen Öle, Fette oder dergleichen hydrophoben Bestandteile insbesondere in den Poren der Silikatmischung der Entfettungsmischung wird die Entfettungsmischung von der Oberfläche des Substrates entfernt.

Grundsätzlich ist es möglich, das Aufbringen der Entfettungsmischung auf die Substratoberfläche durch zusätzliche, vorzugsweise mechanische Maßnahmen zu unterstützen. Beispielsweise ist es möglich, eine Bürstenvorrichtung vorzusehen, mit welcher Bürstenvorrichtung die auf die Substratoberfläche aufgebrachte Entfettungsmischung gleichmäßig auf der Substratoberfläche verteilt wird. Der Auftrag und das Verteilen der Entfettungsmischung auf der Substratoberfläche kann gemäß einer Ausführungsform ausschließlich durch die Bürstenvorrichtung erfolgen.

Es empfiehlt sich, die mit Fetten und/oder Ölen beladene Entfettungsmischung von der Substratoberfläche zu entfernen und danach einer Aufbereitungsanlage zuzuführen. In der Aufbereitungsanlage werden beispielsweise die in den Poren der Entfettungsmischung aufgenommenen Bestandteile entfernt. Es ist möglich, dass die als Trockenpulver ausgebildete Entfettungsmischung im Kreislauf führbar ist, wobei zweckmäßigerweise nur und ausschließlich mit hydrophoben Bestandteilen gesättigte Körner der Entfettungsmischung ausgeschleust werden. Dadurch muss je Umlauf nur ein geringer Teil der mit hydrophoben Verunreinigungen kontaminierten Entfettungsmischung durch jungfräuliche Entfettungsmischungen ersetzt werden, welche jungfräuliche Entfettungsmischung noch nicht in Kontakt mit der Substratoberfläche getreten ist.

Der Erfindung liegt die Erkenntnis zugrunde, dass sich die erfindungsgemäße und regelmäßig als Trockenpulver ausgebildete Entfettungsmischung durch eine hohe Wirksamkeit bei der Entfernung von Fetten, Ölen oder dergleichen hydrophoben Bestandteilen von Oberflächen eines Substrates auszeichnet. Die erfindungsgemäße Entfettungsmaschine zeichnet sich durch eine günstige Adsorptionskinetik für Fette, Öle und dergleichen aus, weswegen überraschend kurze Einwirkzeiten der Entfettungsmischung auf der Substratoberfläche zur vollständigen Fett- bzw. Ölentfernung ausreichend sind. Als besonders vorteilhaft hat sich herausgestellt, dass die erfindungsgemäße Entfettungsmischung lösungsmittelfrei ist. Dadurch zeichnet sich die Aufbereitung der erfindungsgemäßen Entfettungsmischung und auch die Entsorgung von nicht mehr aufbereitbarer, mit beispielsweise hydrophoben Bestandteilen belasteter Entfettungsmischung durch eine einfache Durchführbarkeit aus. Mit anderen Worten wird die aufwendige Aufbereitung eines mit den auf der Oberfläche des Substrates vorhandenen Fetten und/oder Ölen verunreinigten Lösungsmittel vermieden.

In besonders vorteilhafter Weise ist ein Auftrag der erfindungsgemäßen Entfettungsmischung auf eine zu behandelnde Oberfläche eines Substrates überraschend einfach. Dazu ist beispielsweise lediglich ein Presswerkzeug erforderlich, mit welchem Presswerkzeug die Entfettungsmischung auf die zu behandelnde Oberfläche des Substrates aufgetragen werden muss. Eine aufwendige, staubverursachende Bedüsung ist mit der erfindungsgemäßen Entfettungsmischung vermeidbar. Außerdem ermöglicht der Einsatz des beschriebenen Presswerkzeuges eine kontinuierliche Behandlung ohne Prozessunterbrechung. Die erfindungsgemäße Entfettungsmischung lässt sich darüber hinaus optimal auf die zu entfernenden Bestandteile auf der Substratoberfläche beispielsweise durch die Einstellung und/oder Aktivierung der Poren der Entfettungsmischung einstellen.

Nachfolgend wird die Erfindung anhand einer lediglich ein Ausführungsbeispiel darstellenden Zeichnung zusätzlich erläutert. Es zeigen in schematischer Darstellung:
- Fig. 1A: einen Stift mit der erfindungsgemäßen Entfettungsmischung zur Entfernung von Ölen, Fetten und dergleichen hydrophoben Bestandteile aus Textilien,
- Fig. 1B: den Stift gemäß Fig. 1a ohne Schutzhülle
- Fig. 2: einen Querschnitt durch ein erfindungsgemäßes Reinigungstuch mit der erfindungsgemäßen Entfettungsmischung,
- Fig. 3: eine perspektivische Ansicht einer erfindungsgemäßen Hohlfaser in einer ersten Ausführungsform und
- Fig. 4: einen Längsschnitt durch eine erfindungsgemäße Hohlfaser in einer zweiten Ausführungsform.

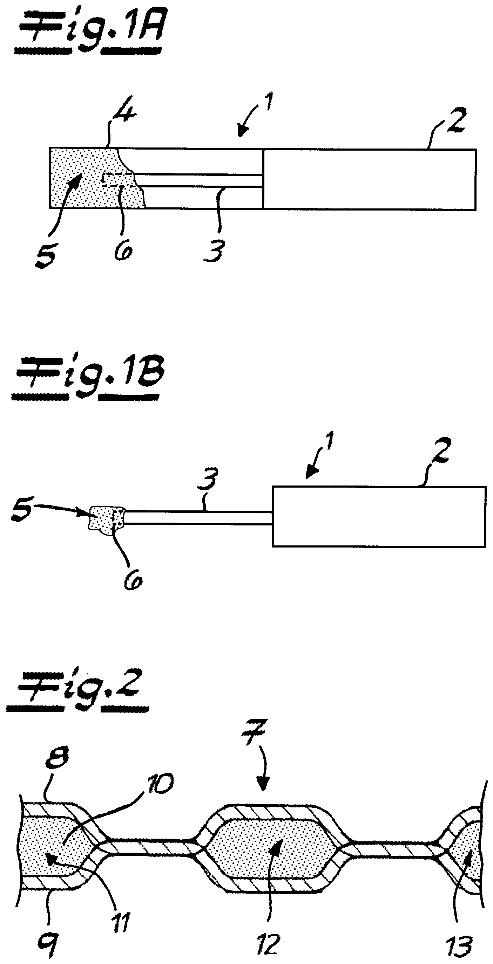

In den Fig. 1A und 1B ist ein Reinigungsstift 1 zur Entfernung von Ölen, Fetten und dergleichen hydrophoben Bestandteile aus Textilien dargestellt. Der Reinigungsstift 1 verfügt über einen als Handgriff 2 ausgebildeten Griffabschnitt, an welchen Handgriff 2 ein als Mine 3 ausgebildetes Applizierungselement angeschlossen ist. In Fig. 1A ist der Zustand des Reinigungsstiftes 1 dargestellt, bei dem die Mine 3 durch eine Schutzhülle 4 vor Beschädigungen geschützt ist. Neben der Mine 3 beinhaltet die Schutzhülle 4 die körnige Entfettungsmischung 5, sodass die Entfettungsmischung 5 auf ein Applizierungsende 6 der Mine 3 aufgebracht wird.

In Fig. 1B ist der Reinigungsstift 1 dargestellt, bei dem ausgehend von Fig. 1A die Schutzhülle 4 entfernt wurde. Es ist erkennbar, dass die Mine 3 an dem Applizierungsende 6, nämlich an dem dem Handgriff 2 abgewandten Ende der Mine 3, mit der Entfettungsmischung 5 beschichtet ist. Durch Aufdrücken des Applizierungsendes 6 auf ein nicht dargestelltes Textil wird bewirkt, dass die in dem Textil enthaltenen Kontaminationen bzw. Öle und/oder Fette von der Entfettungsmischung 5 aufgenommen werden.

In Fig. 2 ist ein erfindungsgemäßes Reinigungstuch 7 dargestellt, das gemäß Fig. 2 zwei Tuchlagen 8, 9 aufweist. Zwischen den Tuchlagen 8, 9 ist eine Schicht 10 aus der Entfettungsmischung 5 angeordnet. In Fig. 2 ist erkennbar, dass das Reinigungstuch voneinander abgetrennte Kammern 11, 12, 13 aufweist, um ein unkontrolliertes Verlagern der Entfettungsmischung 5 in dem Reinigungstuch 7 zu verhindern. Durch Überstreichen einer in Fig. 2 nicht dargestellten, mit Fetten, Ölen oder dergleichen hydrophoben Bestandteilen kontaminierten Oberfläche mit dem Reinigungstuch 7 wird erreicht, dass die Kontaminationen in die Poren der Entfettungsmischung 5 migrieren und so von der Oberfläche entfernt werden.

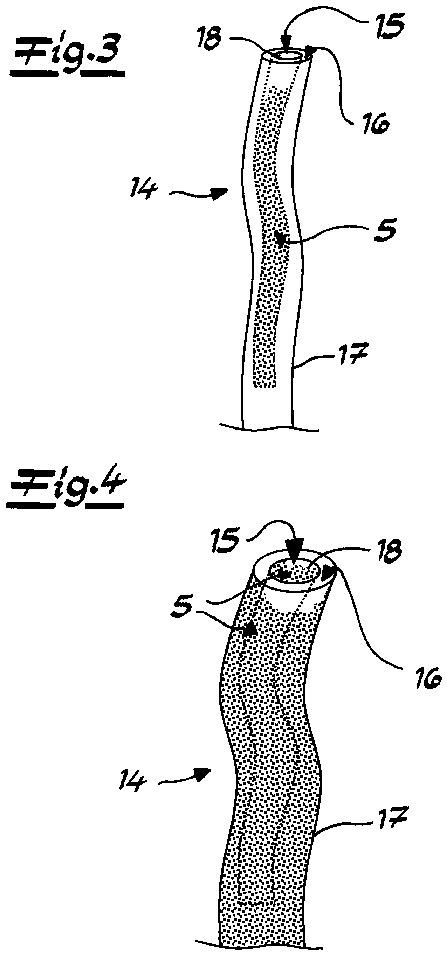

In Fig. 3 ist eine Hohlfaser 14 dargestellt, deren Innenraum bzw. Hohlraum 15 teilweise mit der Entfettungsmischung 5 verfüllt ist. Gemäß dem Ausführungsbeispiel ist eine Wandung 16 der Hohlfaser 14 von einem thermoplastischen Kunststoff gebildet. Fig. 4 zeigt die Hohlfaser 14 in einer zweiten Ausführungsform. Eine äußere Mantelfläche 17 und eine den Innenraum 15 beschränkende innere Oberfläche 18 der Hohlfaser 14 ist mit der Entfettungsmischung 5 beschichtet.

## Patentansprüche

1. Entfettungsmischung zum Entfernen von Fetten, Ölen oder dergleichen hydrophoben Bestandteilen von Oberflächen eines Substrates, wobei
- die Entfettungsmischung als Hauptbestandteil mit mehr als 50 Massen-% eine lösungsmittelfreie Silikatmischung enthält,
- die Silikatmischung ein körniges Schichtsilikat und ein körniges Gerüstsilikat enthält, wobei die Silikatmischung 40 bis 80 Massen-% des Schichtsilikates und 20 bis 60 Massen-% des Gerüstsilikates aufweist,
- bis zu 90 Massen-% der in der Silikatmischung enthaltenen Körner eine Partikelgröße von weniger als 60 µm aufweisen, wobei ferner
- die maximale Korngröße des körnigen Schichtsilikates kleiner als die maximale Korngröße des Gerüstsilikates ist, und wobei
- das Schichtsilikat eine maximale Korngröße von 25 µm bis 65 µm und das Gerüstsilikat eine maximale Korngröße von 55 µm bis 85 µm aufweist.

2. Entfettungsmischung nach Anspruch 1, **dadurch gekennzeichnet, dass** die Entfettungsmischung zumindest 90 Massen-% und vorzugsweise zumindest 95 Massen-% der Silikatmischung und gegebenenfalls ein Adsorbens enthält.

3. Entfettungsmischung nach einem der Ansprüche 1 oder 2, wobei mehr als 50 Massen-% der in der Silikatmischung enthaltenen Körner eine Partikelgröße von mehr 20 µm aufweisen.

4. Entfettungsmischung nach einem der Ansprüche 1 bis 3, wobei der Schichtsilikatgehalt der Silikatmischung höher, vorzugsweise um den Faktor 1,1 bis 2 höher, als der Gerüstsilikatgehalt der Silikatmischung ist.

5. Entfettungsmischung nach einem der Ansprüche 1 bis 4, wobei die Silikatmischung 30 bis 50 Massen-% des Gerüstsilikates enthält, und wobei die Silikatmischung 50 bis 70 Massen-% des Schichtsilikates enthält.

6. Entfettungsmischung nach einem der Ansprüche 1 bis 5, wobei das Gerüstsilikat und/oder das Schichtsilikat jeweils ein Aluminosilikat ist/sind.

7. Entfettungsmischung nach einem der Ansprüche 1 bis 6, wobei das Schichtsilikat ein dreischichtiges, quellbares Schichtsilikat ist und wobei als Gerüstsilikat zumindest eine aus der Gruppe der Zeolithe ausgewählte Komponente in der Silikatmischung enthalten ist.

8. Entfettungsmischung nach einem der Ansprüche 1 bis 7, wobei das Schichtsilikat zumindest ein aus der Gruppe "Bentonit, Kaolinit, Polygorskit, Illit, Glimmer, Chlorit, Pyrophylit, Imogolit, Montmorillonit" ausgewähltes Schichtsilikat ist.

9. Entfettungsmischung nach einem der Ansprüche 1 bis 8, wobei das Schichtsilikat ein Calcium-Bentonit ist.

10. Entfettungsmischung nach einem der Ansprüche 1 bis 10, wobei das Bentonit mit Natrumcarbonat aktiviert ist.

11. Reinigungsstift zur Entfernung von Fetten, Ölen oder dergleichen hydrophoben Bestandteile von Oberflächen eines Substrates, wobei der Reinigungsstift (1) einen Griffabschnitt (2) und ein eine Entfettungsmischung (5) nach einem der Ansprüche 1 bis 10 enthaltendes Applizierungselement aufweist.

12. Reinigungstuch zur Entfernung von Fetten, Ölen oder dergleichen hydrophoben Bestandteile von Oberflächen eines Substrates, wobei das Reinigungstuch (7) zumindest eine Tuchlage (8, 9) aus einem Fasermaterial aufweist und wobei die Tuchlage (8, 9) eine Entfettungsmischung (10) nach einem der Ansprüche 1 bis 10 enthält.

13. Hohlfaser zur Entfernung von Fetten, Ölen oder dergleichen hydrophoben Bestandteile von Oberflächen eines Substrats, wobei ein Hohlraum (15) der Hohlfaser (14) zumindest teilweise mit einer Entfettungsmischung (5) nach einem der Ansprüche 1 bis 10 verfüllt ist und/oder wobei eine äußere Oberfläche (17) und/oder eine innere Oberfläche (18) der Hohlfaser (14) zumindest teilweise mit einer Entfettungsmischung (5) nach einem der Ansprüche 1 bis 10 beschichtet ist.

## Claims

1. A degreasing mixture for removing grease, oils, or similar hydrophobic components from surfaces of a substrate, wherein
- the degreasing mixture contains more than 50 % by weight of a solvent-free silicate mixture as the main component,
- the silicate mixture contains a granular phyllosilicate and a granular tectosilicate, wherein the silicate mixture comprises 40 % to 80 % by weight of the phyllosilicate and 20 % to 60 % by weight of the tectosilicate,
- up to 90 % by weight of the granules contained in the silicate mixture has a particle size of less than 60 µm, wherein furthermore
- the maximum grain size of the granular phyllosilicate is smaller than the maximum grain size of the tectosilicate, and wherein
- the phyllosilicate has a maximum grain size of 25 µm to 65 µm and the tectosilicate has a maximum grain size of 55 µm to 85 µm.

2. The degreasing mixture as claimed in claim 1, **characterized in that** the degreasing mixture contains at least 90 % by weight and preferably at least 95 % by weight of the silicate mixture and optionally, an adsorbent.

3. The degreasing mixture as claimed in claim 1 or claim 2, wherein more than 50 % by weight of the granules contained in the silicate mixture has a particle size of more than 20 µm.

4. The degreasing mixture as claimed in one of claims 1 to 3, wherein the phyllosilicate content of the silicate mixture is greater than the tectosilicate content of the silicate mixture, preferably by a factor of 1.1 to 2.

5. The degreasing mixture as claimed in one of claims 1 to 4, wherein the silicate mixture contains 30 % to 50 % by weight of tectosilicate, and wherein the silicate mixture contains 50 % to 70 % by weight of phyllosilicate.

6. The degreasing mixture as claimed in one of claims 1 to 5, wherein the tectosilicate and/or the phyllosilicate are each an aluminosilicate.

7. The degreasing mixture as claimed in one of claims 1 to 6, wherein the phyllosilicate is a triple-layered phyllosilicate which is capable of swelling, and wherein at least one component selected from the group of zeolites is contained in the silicate mixture as the tectosilicate.

8. The degreasing mixture as claimed in one of claims 1 to 7, wherein the phyllosilicate is at least one phyllosilicate selected from the group consisting of bentonite, kaolinite, palygorskite, illite, mica, chlorite, pyrophyllite, imogolite and montmorillonite.

9. The degreasing mixture as claimed in one of claims 1 to 8, wherein the phyllosilicate is a calcium bentonite.

10. The degreasing mixture as claimed in one of claims 1 to 10, wherein the bentonite is activated with sodium carbonate.

11. A cleaning pen for removing grease, oils, or similar hydrophobic components from surfaces of a substrate, wherein the cleaning pen (1) is provided with a gripping section (2) and an applicator element containing a degreasing mixture (5) as claimed in one of claims 1 to 10.

12. A cleaning pen for removing grease, oils, or similar hydrophobic components from surfaces of a substrate, wherein the cleaning cloth (7) is provided with at least one layer of cloth (8, 9) produced from a fibrous material, and wherein the layer of cloth (8, 9) contains a degreasing mixture (10) as claimed in one of claims 1 to 10.

13. A hollow fibre for removing grease, oils, or similar hydrophobic components from surfaces of a substrate, wherein a hollow space (15) of the hollow fibre (14) is at least partially filled with a degreasing mixture (5) as claimed in one of claims 1 to 10, and/or wherein an outer surface (17) and/or an inner surface (18) of the hollow fibre (14) is at least partially coated with a degreasing mixture (5) as claimed in one of claims 1 to 10.

## Revendications

1. Mélange dégraissant destiné à retirer des graisses, des huiles ou des composants hydrophobes similaires de surfaces d'un substrat
- le mélange dégraissant contenant en tant qu'ingrédient principal à raison de plus de 50 % en masse un mélange de silicates exempt de solvant,
- le mélange de silicates contenant un phyllosilicate granuleux, le mélange de silicates comportant de 40 à 80 % en masse du phyllosilicate et de 20 à 60 % en masse du tectosilicate,
- jusqu'à 90 % en masse des grains contenus dans le mélange de silicates présentant une taille de particules inférieure à 60 µm, par ailleurs
- la taille maximale des grains du phyllosilicate granuleux étant inférieure à la taille maximale des grains du tectosilicate et
- le phyllosilicate présentant une taille maximale des grains de 25 µm à 65 µm et le tectosilicate présentant une taille maximale des grains de 55 µm à 85 µm.

2. Mélange dégraissant selon la revendication 1, **caractérisé en ce que** le mélange dégraissant contient au moins 90 % en masse et de préférence au moins 95 % en masse du mélange de silicates et le cas échéant, un agent adsorbant.

3. Mélange dégraissant selon l'une quelconque des revendications 1 ou 2, plus de 50 % en masse des grains contenus dans le mélange de silicates présentant une taille de particules supérieure à 20 µm.

4. Mélange dégraissant selon l'une quelconque des revendications 1 à 3, la teneur en phyllosilicate du mélange de silicates étant plus élevée, de préférence du coefficient 1,1 à 2 que la teneur en tectosilicate du mélange de silicates.

5. Mélange dégraissant selon l'une quelconque des revendications 1 à 4, le mélange de silicates contenant de 30 à 50 % en masse du tectosilicate et le mélange de silicates contenant de 50 à 70 % en masse du phyllosilicate.

6. Mélange dégraissant selon l'une quelconque des revendications 1 à 5, le tectosilicate et/ou le phyllosilicate étant chacun un aluminosilicate.

7. Mélange dégraissant selon l'une quelconque des revendications 1 à 6, le phyllosilicate étant un phyllosilicate gonflant tricouches et un composant choisi dans le groupe des zéolithes étant contenu en tant que tectosilicate dans le mélange de silicates.

8. Mélange dégraissant selon l'une quelconque des revendications 1 à 7, le phyllosilicate étant au moins un phyllosilicate choisi dans le groupe contenant « la bentonite, la kaolinite, la polygorskite, l'illite, le mica, la chlorite, la pyrophyllite, l'imogolite, la montmorillonite ».

9. Mélange dégraissant selon l'une quelconque des revendications 1 à 8, le phyllosilicate étant une bentonite calcique.

10. Mélange dégraissant selon l'une quelconque des revendications 1 à 10, la bentonite étant activée avec du carbonate de sodium.

11. Stick nettoyant, destiné à éliminer des graisses, des huiles ou des composants hydrophobes similaires de surfaces d'un substrat, le stick nettoyant (1) comportant un tronçon formant manche (2) et un élément d'application contenant un mélange dégraissant (5) selon l'une quelconque des revendications 1 à 10.

12. Lingette nettoyante destinée à éliminer des graisses, des huiles ou des composants hydrophobes similaires de surfaces d'un substrat, la lingette nettoyante (7) contenant au moins une couche formant lingette (8, 9) en une matière fibreuse et la couche formant lingette (8, 9) contenant un mélange dégraissant (10) selon l'une quelconque des revendications 1 à 10.

13. Fibre creuse destinée à éliminer des graisses, des huiles ou des composants hydrophobes similaires de surfaces d'un substrat, une cavité (15) de la fibre creuse (14) étant remplie au moins en partie d'un mélange dégraissant (5) selon l'une quelconque des revendications 1 à 10 et/ou une surface extérieure (17) et/ou une surface intérieure (18) de la fibre creuse (14) étant revêtue au moins en partie d'un mélange dégraissant (5) selon l'une quelconque des revendications 1 à 10.
